# EUROPEAN PATENT APPLICATION

(11) **EP 1 816 091 A1**
(43) Date of publication of application: **08.08.2007**
(21) Application number: 07101555.6
(22) Date of filing: 01.02.2007
(51) Int. Cl.: B65G 15/42, B65G 23/06

(54) **Conveyor with roller on belt return span**

(30) Priority: 01.02.2006 US 275871
(71) Applicant: ThermoDrive LLC, Grand Rapids, MI 49503 (US)
(72) Inventor: DeGroot, Michael, Grand Rapids, MI 49507 (US)
(74) Representative: Schaumburg, Thoenes, Thurn, Landskron

(57) **Abstract**

A conveyor comprises a drive pulley, an idler spaced from the drive pulley, and an endless thermoplastic belt wrapped around the drive pulley and the idler. The endless thermoplastic belt has a load-carrying span adapted to move from the idler to the drive pulley and a return span adapted to move from the drive pulley to the idler. The conveyor further includes a roller on the return span near the idler, and the weight of the roller acting on the return span tends to keep the endless thermoplastic belt engaged with the idler.

## Description

### BACKGROUND OF THE INVENTION

### Field of the Invention

This invention relates to a conveyor having an endless thermoplastic belt wrapped around a drive pulley and an idler.

### Description of the Related Art

Endless thermoplastic conveyor belts are typically used in situations where hygiene and cleanliness are critically important. For example, in food processing plants such as those that process meat products for human consumption, endless thermoplastic belt conveyors are used to transport items. Sanitation is critically important and, therefore, the endless belts used in such conveyors are conventionally made of materials that can be hygienically cleaned.

Two types of endless thermoplastic belt conveyors are (1) conveyors with friction driven belts and (2) conveyors with low tension, direct drive belts. The former comprises an endless thermoplastic belt having smooth continuous surfaces on both sides of the belt and wrapped around at least a pair of smooth pulleys, such as a drive pulley and an idler. The belt is tensioned such that friction between the belt and the drive pulley induces movement of the belt. Thus, torque is transmitted to the belt through friction between the drive pulley surface and the adjacent surface of the belt. The effectiveness of this type of drive is a function of belt tension (both initial pretension and the tension generated due to the product load) and the coefficient of friction of the material of the belt surface and the material of the pulley surface. However, a friction driven flat belt is subject to contaminants that can affect the coefficient of friction. Moreover, elongated belts typically stretch over time and under load; such stretching can affect its tension, which affects the operation of the conveyor. When the belt stretches, the increased length of the belt tends to accumulate on the return side of the belt, thereby reducing the tension on the return side and affecting the friction between the belt and the drive pulley as well as between the belt and the idler. Prior art solutions to solving this problem are to pretension the belt before each use, which shortens the life of the belt, and to continually adjust the belt tension for varying loads, which is complex and can create tracking problems.

The second type of conveyor with the low tension, direct drive belt comprises an endless thermoplastic belt with a smooth continuous surface on one side and teeth on the other side adapted to engage grooves or sheaves in a drive sprocket. In an ideal toothed belt, torque is transmitted to the belt through the contact of a face of a groove or sheave on the drive sprocket to a face of a tooth on the belt. But the use of a thermoplastic toothed belt as a direct drive belt with a sprocket introduces problems, primarily because of the elasticity of the belt.

Because a thermoplastic belt stretches under load, the belt teeth may not always mate with the sprocket sheaves as the belt wraps around the sprocket. Prior solutions have determined that the tooth pitch of the belt must be less than the pitch of the drive sprocket at less than maximum elongation of the belt. Also, the sprocket pitch must equal the pitch of the belt at maximum elongation, give or take a fraction of a percent. Moreover, to ensure that the belt teeth are positioned to enter the sprocket sheaves, the width of each sheave in the sprocket must exceed the belt tooth width at least by the amount of distance generated by elongating the belt the maximum allowable amount over the span of the belt wrap.

Yet problems remain in ensuring that the belt teeth stay engaged with the sprocket sheaves over the full range of belt elongation and load in the field. Due to the necessary pitch difference between the belt and the sprocket, only one belt tooth will be driven by a sprocket sheave at any given moment. It has been found that this engaged tooth is always the tooth that is about to exit the sprocket. For all subsequent belt teeth that engage the sprocket sheaves at any given moment, there is a gap between the face of the belt tooth and the face of the sprocket sheave, and that gap progressively increases in size for each successive tooth. The size of these gaps are a function of belt tension, in that each respective gap is largest when the belt has minimum tension and smallest when the belt is at maximum tension. If the belt tension exceeds a predetermined maximum, the entry tooth will no longer sit properly in the sprocket sheave and effective drive characteristics will be lost. In other words, the sprocket may rotate while the belt slips until a tooth engages again.

It can be seen that as the exiting tooth disengages from the drive sprocket there remains some amount of gap between the following belt tooth and the face of its respective sprocket sheave. Therefore, discounting any momentum of the belt and any friction between the belt and the sprocket, the belt will effectively stop for a brief moment until the following sheave re-engages the new "exit tooth." For this brief moment, no torque is transmitted from the sprocket to the belt, and, thus, the belt speed is temporally retarded.

This motion causes a slight amount of vibration and noise in the system. Vibration increases in frequency as sprocket tooth pitch is reduced and/or sprocket rotation speed is increased. It may be nearly undetectable in belt applications with a small tooth pitch and a large amount of mass for damping, such as when large product loads approach a predetermined maximum for belt elongation. But for many applications, particularly where loads are light and/or belt speed is slower, the resultant vibration and noise may be unacceptable.

Nevertheless, some slip between the belt and the sprocket is what enables a direct drive application to work. This temporary disengagement of belt teeth from sprocket sheaves causes the average belt speed to be less than the average sprocket speed. In fact, the average belt speed is less than the sprocket speed by the percentage of elongation that is still available in the belt (max elongation - current elongation). Because of this necessary slip, any characteristics of a flat belt drive will compromise the benefits of direct drive, e.g. friction. Friction between the belt and the sprocket will retard slippage and may cause the trailing tooth to miss the sprocket sheave altogether.

Another problem occurs when the belt is under virtually no tension. In some applications, such as a horizontally positioned conveyor, the weight of the lower span of the belt tends to pull the teeth at the exit point out of the respective sprocket sheave. The critical area of belt wrap around the sprocket is the short distance between the exit point and one sprocket sheave pitch back. If the belt tooth remains engaged through this arc then proper drive will be achieved, but if not, belt teeth will "pop" and the driving dynamics will become uncontrolled. Additionally, when the belt is under virtually no tension, keeping the belt teeth engaged with the sheaves of the idler pulley can become problematic.

Thus, both types of the endless thermoplastic belt conveyors - those with friction driven belts and low tension, direct drive belts - can suffer from problems related to keeping the belt engaged on the idler due to excess length on the return side of the belt. If the belt is long enough and heavy enough to form a catenary curve on the return side, the weight of the belt may be sufficient to provide the requisite tension. However, the belt is not always sufficiently heavy, and the conditions of the conveyor, including the varying sizes of loads, are not always suitable for relying on formation of a natural catenary curve.

### SUMMARY OF THE INVENTION

The invention solves the aforementioned problems by providing a conveyor comprising a drive pulley; an idler spaced from the drive pulley; an endless thermoplastic belt wrapped around the drive pulley and the idler and driven by the drive pulley for movement about the drive pulley and the idler, the endless thermoplastic belt having a load-carrying span adapted to move from the idler to the drive pulley and a return span adapted to move from the drive pulley to the idler; and a roller on the return span near the idler whereby the weight of the roller acting on the return span tends to keep the endless thermoplastic belt engaged with the idler.

The endless thermoplastic belt has a width, and the roller can have a weight corresponding to less than one pound per inch of the width of the endless thermoplastic belt.

The endless thermoplastic belt can comprise a plurality of teeth, and the drive pulley can comprise a plurality of sheaves configured to engage the teeth for moving the endless thermoplastic belt. The idler can comprise a pulley having a plurality of sheaves. The roller and the teeth of the endless thermoplastic belt can have complementary shapes. For example, each of the teeth can comprise multiple spaced teeth portions, and the roller can comprise projections sized for receipt in the spaces between the teeth portions to form the complementary shapes.

The endless thermoplastic belt can have a smooth inner surface, and the roller can be smooth to complement the smooth inner surface of the endless thermoplastic belt. The endless thermoplastic belt can comprise a plurality of holes that at least partially extend through the endless thermoplastic belt, and the drive pulley can have a plurality of teeth configured to engage the holes for moving the endless thermoplastic belt. The idler can comprise a pulley having a plurality of teeth.

The endless thermoplastic belt can extend between a pair of side edges, and the roller can extend from one of the side edges of the endless thermoplastic belt to the other side edge of the endless thermoplastic belt.

The conveyor can further comprise a slide that supports the roller on the return span and can be configured to allow movement of the roller toward and away from the return span. The slide can be further configured to prevent movement of the roller in the direction of movement of the return span. In one embodiment, the slide can be configured to allow vertical movement of the roller and prevent horizontal movement of the roller.

The return span can have a center located about midway between the drive pulley and the idler, and the roller can be positioned closer to the idler than to the center of the return span.

### BRIEF DESCRIPTION OF THE DRAWINGS

In the drawings:
FIG. 1 is a perspective side view of a prior art low tension, direct drive belt installed between two sprockets;
FIG. 2 is an enlarged view in elevation of a portion of FIG. 1;
FIG. 3 is a view similar to FIG. 2 showing a position limiter according to one embodiment of the invention;
FIG. 4 is a perspective side view of a center drive belt system according to another embodiment of the invention;
FIG. 5 is a fractional side view of a belt and sprocket showing an alternative sheave construction according to another embodiment of the invention.
FIG. 6 is a perspective side view of a conveyor with a low tension, direct drive endless thermoplastic belt and a roller on a return side of the belt according to another embodiment of the invention.
FIG. 7 is a sectional view taken along line 7-7 of FIG. 6.

### DETAILED DESCRIPTION

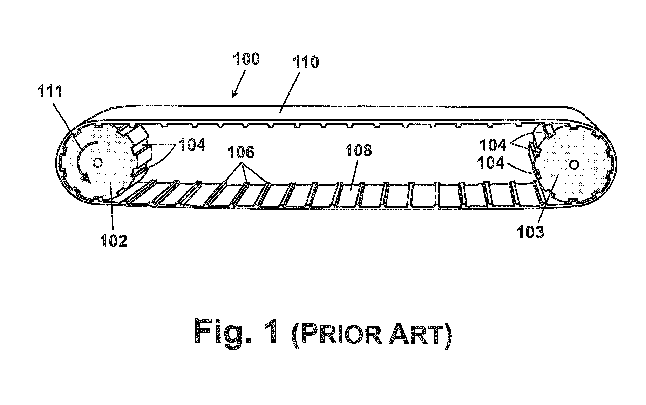

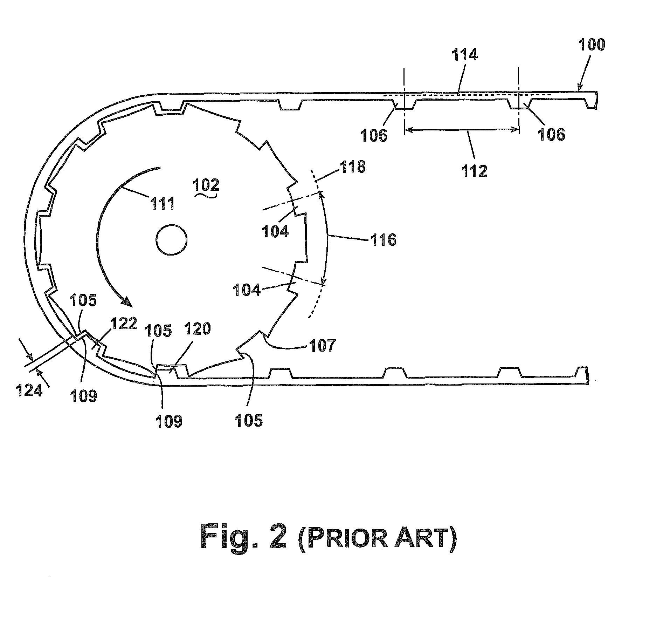

Some problems with known thermoplastic direct drive belts are shown in Figs. 1 and 2. An endless belt 100 is seen in Fig. 1 in a typical installation between two sprockets 102 and 103. The sprockets 102, 103 are conventional and they can be any of a number of different forms and sizes. Each sprocket 102 or 103 has a number of transverse grooves or sheaves 104 spaced around its circumference. Each sheave 104 has a driving face 105 and an opposed, non-driving face 107. The belt 100 has a plurality of teeth 106 equidistantly spaced from each other on the inside surface 108 of the belt, each tooth having a driving surface 109. The teeth 106 engage the sheaves 104 of each sprocket as the belt wraps around the sprocket. At least one sprocket, e.g. sprocket 102, is a drive sprocket; the other 103 can be an idler or slave sprocket. In this configuration, the upper span of the belt will carry loads as the belt 100 travels in the direction of arrow 111. The belt 100 has an outside surface 110 that is fairly smooth and free of discontinuities, typically made of a thermoplastic material such as Pebax® resin, polyester or polyurethane.

The belt 100 has a pitch 112 defined as the distance between the centerlines of adjacent teeth 106. The belt pitch 112 is measured along a belt pitch line 114, which corresponds to the neutral bending axis of the belt. As the belt 100 bends around the sprocket 102, the neutral bending axis is that imaginary plane on one side of which the belt material is under compression and on the other side of which the belt material is under tension.

Similarly, the sprocket pitch 116 is the arc length between the centerlines of adj acent sheaves 104, measured along the sprocket's pitch circle 118. The sprocket pitch circle 118 in this case corresponds to the belt pitch line 114 as the belt 100 wraps around the sprocket 102. In other words, the sprocket pitch circle 118 will have the same radius as the belt pitch line 114 as the belt wraps around the sprocket.

As noted above, the exit tooth 120 will be the drive tooth as its driving surface 109 contacts the driving surface 105 of the sheave 104 that has received the exit tooth. The trailing tooth 122 nests in its corresponding sheave 104, but there is a gap 124 between the tooth driving surface 109 and the sheave driving surface 105.

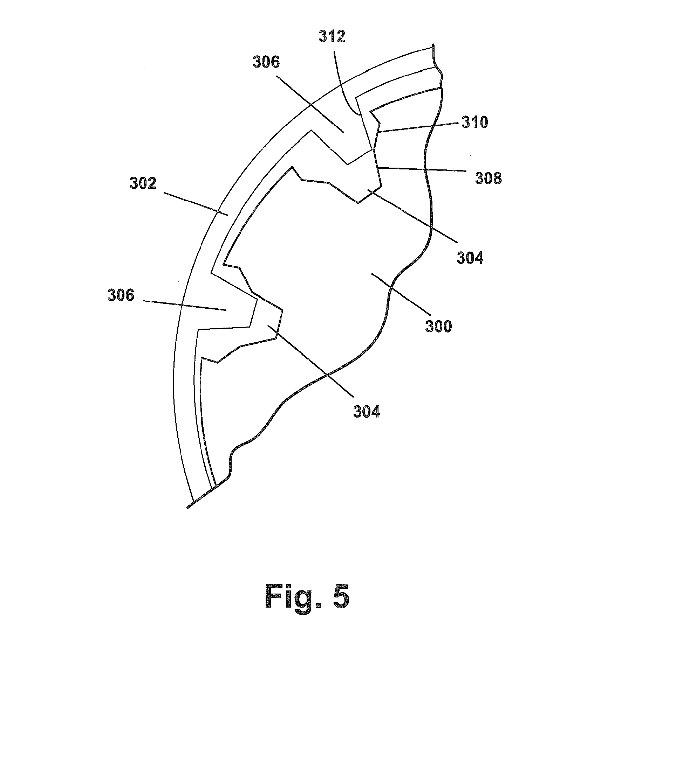

According to one embodiment of the invention, the sprocket and belt are designed to permit minimal friction between them. The toothed surface of the belt can be coated with a friction reducing material, e.g. PTFE. The sprocket will preferably have minimal surfaces contacting the belt anywhere but on the belt tooth surfaces. For example, the supporting structure between adjacent sheaves can be recessed from the perimeter of the sprocket. It can also have a narrower neck to reduce surface contact with the belt (See Fig. 5).

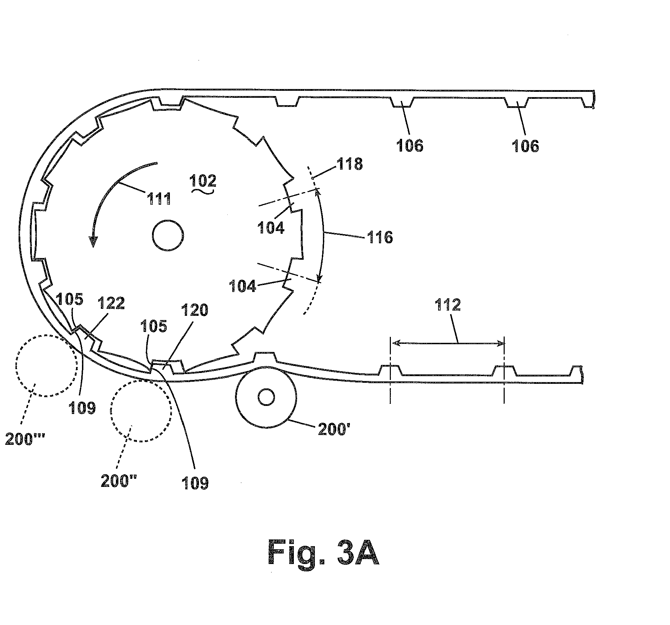

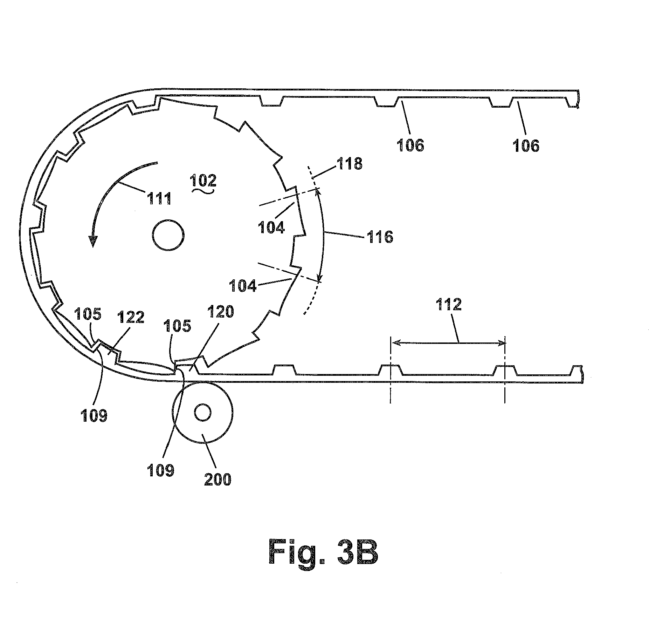

In another aspect of the invention, a position limiter 200 is disposed near where the exit tooth 120 of the belt leaves the corresponding sheave of the sprocket, as shown in Figs. 3a and 3b. One preferred location in Fig. 3b places the position limiter 200 adjacent the sprocket at the exit location of the belt tooth. Alternative locations in Fig. 3a include a sprocket 200' just past the exit point. In this case, the position limiter deflects the belt enough to ensure that the tooth does not prematurely exit the sheave. Other alternative locations, shown in phantom) are at 200" immediately prior to the exit point and 200'" at the next succeeding tooth 122. Preferably, the position limiter 200 will be disposed in such a manner that the belt can not lift off the sprocket more than 25% of the tooth height until the exit point.

The position limiter 200 can be a belt-width roller, as shown, or it can be multiple rollers, such as a pair with one on each edge of the belt. Alternatively the position limiter can be one or more arms or points bearing against the belt, preferably with friction reducing wear pads. Further, the position limiter can be a scraper bar bearing against the belt that will serve two functions, to wit: maintaining the exit tooth within the sheave of the sprocket and cleaning the belt as it exits the sprocket. The position limiter 200 need not extend across the belt. It need only be positioned to maintain the belt against the sprocket or sprockets until the driven tooth is timely released from the respective sheave.

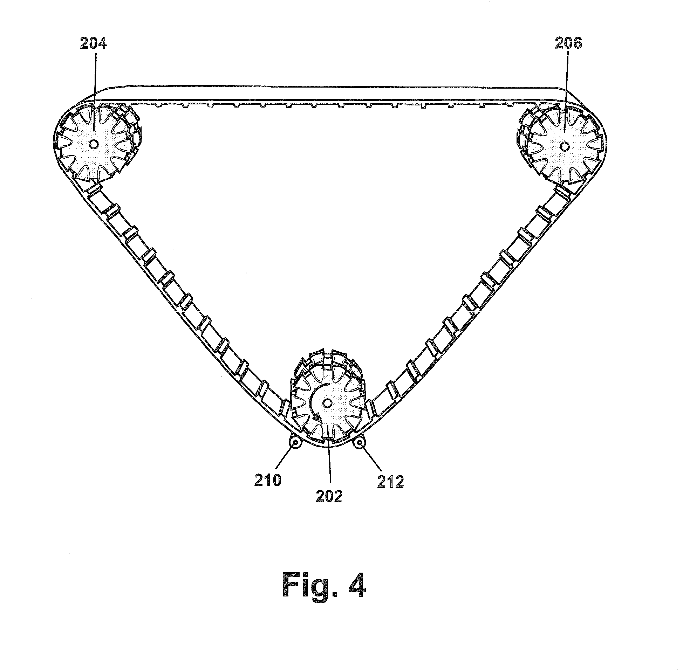

An alternative embodiment of a direct drive thermoplastic belt system, according to one embodiment of the invention, is shown in Fig. 4. The system has a center drive sprocket 202 and two idler sprockets 204, 206 with an endless belt 208. In accordance with the invention, two position limiters 210, 212 are used with the drive sprocket 202. One limiter 210 is placed near the entry point where the belt tooth enters engagement with the sprocket sheave. The other limiter 212 is placed near the exit. Preferably, the belt wrap is minimized such that only three teeth are wrapped at any time.

A center drive such as this solves the problems associated with any "flat belt drive" component of the system, such as might be caused by friction between the belt an the sprocket for example. As explained above, friction can cause the belt entry tooth to advance relative to the pulley tooth and thus "skip". This might occur, for example, when the friction force between the belt and the sprocket generates a higher speed component than the driving force of the tooth drive surface against the sprocket drive surface. Minimizing the amount of wrap also tends to reduce the opportunity for friction between the belt and the sprocket.

It has been found that if any of the sprockets are not drive sprockets, the speed of the idler sprocket can cause problems. The drive sprocket is generally traveling at a greater speed than the belt speed. If the same geometry was used for the idler sprocket as the drive sprocket then, for proper tooth engagement, the idler sprocket would have to travel at the same speed as the drive sprocket. But the idler sprocket cannot travel any faster than the belt, inasmuch as the belt drives the idler sprocket. Therefore the idler sprocket must have a different pitch than the drive sprocket (different geometry). Preferably, the idler sprocket pitch will be less than or equal to the pitch of an un-tensioned belt. Consequently, as the belt pitch changes with elongation, the idler sprocket will be compelled to go slower than the belt. Just as in the drive sprocket, the width of the sheaves must exceed the belt tooth width such that there is enough gap to allow for the added length of belt that will occur at the maximum belt tension over the span of belt wrap.

The idler sprocket will primarily be driven as by a flat belt because of its low drag characteristics. This will cause the entry tooth on an elongated belt to not ideally engage a sheave on the idler sprocket. To overcome this problem, the coefficient of friction must be minimized as explained earlier. In addition, the angle of the tooth contact face can be designed such that at maximum elongation of the belt, the tip of the belt tooth will contact the sprocket sheave driving surface at some point. This will allow the belt tooth to slowly engage the sprocket sheave while slowing the idler sprocket down until the proper engagement is made. An example is shown in Fig. 5 where an idler sprocket 300 is driven by a belt 302. Sheaves 304 in the sprocket 300 are driven by teeth 306 on the belt 302. To ensure that each tooth 306 properly engages the corresponding sheave 304, the side of the sheave has two walls at different angles. The lower wall portion 308 is at a steeper angle than the upper wall portion 310. Preferably, the upper wall portion is at an angle wider than the angle of the belt tooth 306. This works since the added distance that must be accommodated is only generated over the span of one tooth pitch for the previous tooth will have already engaged the idler.

Another option for an idler sprocket is to use a stationary disk that the belt simply slides against. While this increases friction between the belt and the idler, it is of no consequence since there is no toothed drive between the belt and the idler. To accommodate these disks longitudinal grooves are provided through the teeth on the bottom of the belt at set increments to enable the belt to move smoothly over the stationary drive sprockets. Using these disks eliminates the complications of idler sprocket geometry as well as functioning as effective tracking devices. Further, by being stationary the belt will not have a tendency to "climb up" these disks as it would if the smooth sprockets were rotating.

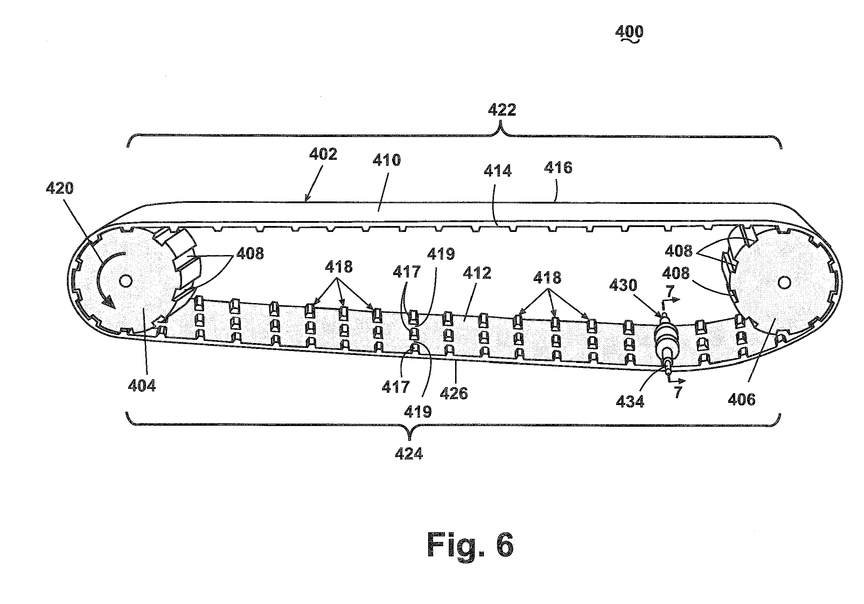

Another alternative embodiment of a direct drive endless thermoplastic belt conveyor 400, according to one embodiment of the invention, is shown in Fig. 6. The conveyor 400 comprises an endless belt 402 wrapped around two pulleys 404, 406. The pulleys 404, 406 are conventional and can be any of a number of different forms and sizes. Each pulley 404, 406 has a number of transverse grooves or sheaves 408 spaced around its circumference. The belt 402 comprises a generally smooth outer surface 410 and an inner surface 412 joined along side edges 414, 416. The distance between the side edges 414, 416 defines a width of the belt 402. The belt 402 has a plurality of teeth 418 spaced from each other on the inside surface 412 of the belt 402. Each of the teeth 418 comprises a plurality of teeth portions 417 extending at least partly across the width of the belt 402 and spaced from one another by gaps 419. The teeth 418 engage the sheaves 408 of each pulley 404, 406 as the belt 402 wraps around the pulley 404, 406. At least one pulley, e.g. pulley 404, is a drive pulley; the other pulley 406 can be an idler or slave pulley.

In this configuration, the belt 402 travels in the direction of arrow 420 as the drive pulley 404 rotates in the direction of the arrow 420. A portion of the belt 402 that moves from the idler pulley 406 to the drive pulley 404 is an upper or load-carrying span 422, and a portion of the belt 402 that moves from the drive pulley 404 to the idler pulley 406 is a lower or return span 424. In the configuration illustrated in Fig. 6, the load-carrying span 422 and the return span 424 are horizontally oriented, but it is within the scope of the invention for the spans 422, 424 to be oriented vertically or at an angle between horizontal and vertical orientations. If the spans 422, 424 are vertically oriented, the load-carrying span 422 is not positioned above the return span 424; therefore, the load-carrying and return spans 422, 424 are not technically "upper" and "lower" spans. In all other configurations, the load-carrying span 422 is positioned vertically above the return span 424.

According to one embodiment of the invention, the conveyor 400 further comprises a roller 430, which can be freely rotatable, located on the return span 424. The roller 430 can be located near the idler pulley 406, which corresponds to a position closer to the idler pulley 406 than the drive pulley 404. In other words, the return span 424 has a center 426 located about midway between the drive pulley 404 and the idler pulley 406, and the roller 430 is located between the center 426 and the idler pulley 406. According to one embodiment, the roller 430 can be positioned closer to the idler pulley 406 than the center 426.

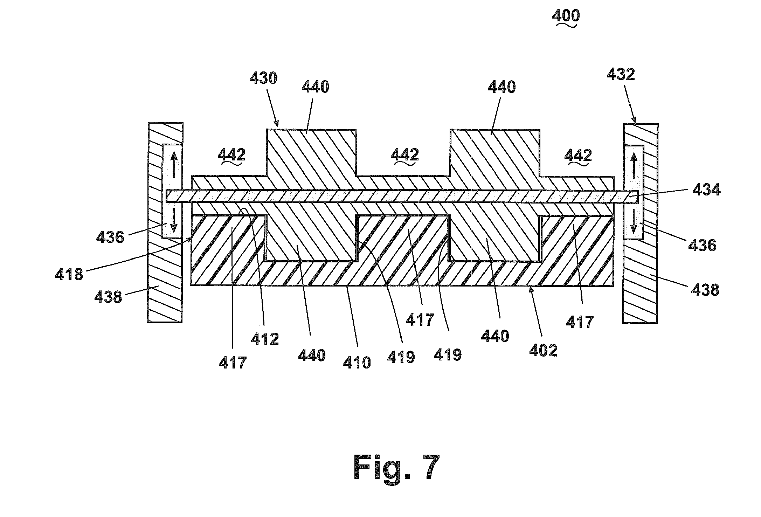

The conveyor 400 comprises a slide 432 that supports the roller 430 on the return span 424. An exemplary slide can be viewed in Fig. 7 and is not shown in Fig. 6 to better illustrate the roller 430 on the return span 424. In particular, the slide 432 is configured to allow the roller 430 to move toward and away from the return span 424 yet prevent movement of the roller 430 in the direction of movement of the return span 424 and in the direction opposite of movement of the return span 424. In the configuration shown in Fig. 6, where the conveyor 400 is horizontally oriented, the slide 432 is configured to allow vertical movement of the roller 430 and prevent horizontal movement of the roller 430. The slide 432 can have any suitable form. For example, as shown in Fig. 7, the roller 430 can be mounted for free rotation on an axle 434 that is slidably mounted within grooves 436 on vertical posts 438 positioned on each side of the roller 430. The axle 434 can slide along the grooves 436 in the posts 438 such that the roller 430 can effectively float on the return span 424 while acting on the return span 424, as will be described in more detail below.

The roller 430 can have any suitable form, including a cylindrical roller as shown in Figs. 6 and 7. Further, the roller 430 can be configured to have a shape complementary to that of the teeth 418 to accommodate the teeth 418 as the belt 402 moves relative to the roller 430 from the drive pulley 404 to the idler pulley 406 and to prevent the roller 430 from bouncing relative to the belt 402 as a result of the teeth 418. For example, the roller 430 can comprise a plurality of projections 440 sized for receipt within the gaps 419 between the teeth portions 417 and spaced by openings 442 sized to receive the teeth portions 417. Thus, during operation, as the belt 402 moves relative to the roller 430, the openings 442 receive the teeth portions 417 while the gaps 419 receive the projections 440 so that the belt 402 can smoothly pass the roller 430. Additionally, the roller 430 can be configured to extend across the entire width of the belt 402 or to extend farther than or less than the width of the belt 402.

The roller 430 has a weight suitable to act on the return span 424 to add enough tension to the return span 424 to keep the belt 402 engaged with the idler pulley 406. At the same time, the weight of the roller 430 does not add significant amounts of tension to the overall belt 402 that would have adverse effects on the drive characteristics of the belt 402. According to one embodiment, the roller 430 is lightweight. For example, the roller 430 can have a weight less than about one pound per inch of the width of the belt 402. By adjusting the weight of the roller 430, the amount of tension on the return span 424 can be controlled to keep the belt 402 engaged with the idler pulley 406. Alternatively, the roller 430 can be biased to exert a force on the return span 424 comparable to a weighted roller. In such case, the bias can be controlled in order to adjust the force applied to the return span. Biasing can be accomplished by a fixed spring, or by an adjustable spring such as a gas spring.

In addition to the weight of the roller 430, the position of the roller 430 relative to the drive pulley 404 and the idler pulley 406 also affects the behavior of the return span 424. As the position of the roller 430 moves farther from the idler pulley 406 and closer to the center 426, the amount of wrap around the drive pulley 404 decreases (i.e., the belt 402 leaves the drive pulley 404 earlier). By placing the roller 430 near the idler pulley 406, the roller 430 adds sufficient tension to the return span 424 to keep the belt 402 engaged with the idler pulley 406, yet the added tension does not pull the belt 402 away from the drive pulley 404 enough to contribute to significant premature exit of the belt 402 from the drive pulley 404.

The use of a roller to keep the belt engaged with the idler pulley is also applicable to a low tension, direct drive conveyor having pins on the pulleys and complementary holes in the belt, wherein the holes extend at least partially through the belt, as disclosed in U.S. Patent Application No. 60/743190, which is incorporated herein by reference in its entirety. In this case, the roller can have a smooth surface because the belt inside surface is smooth, i.e., it lacks any teeth or other projections that would abut the roller as the belt moves relative to the roller.

While the invention has been specifically described in connection with certain specific embodiments thereof, it is to be understood that this is by way of illustration and not of limitation, and the scope of the appended claims should be construed as broadly as the prior art will permit.

## Claims

1. A conveyor comprising:
a drive pulley;
an idler spaced from the drive pulley;
an endless thermoplastic belt wrapped around the drive pulley and the idler and driven by the drive pulley for movement about the drive pulley and the idler; the endless thermoplastic belt having a load-carrying span adapted to move from the idler to the drive pulley and a return span adapted to move from the drive pulley to the idler; and
a roller on the return span near the idler whereby the weight of the roller acting on the return span tends to keep the endless thermoplastic belt engaged with the idler.

2. The conveyor according to claim 1, wherein the endless thermoplastic belt has a width, and the roller has a weight corresponding to less than one pound per inch of the width of the endless thermoplastic belt.

3. The conveyor according to claim 1, wherein the endless thermoplastic belt comprises a plurality of teeth, and the drive pulley comprises a plurality of sheaves configured to engage the teeth for moving the endless thermoplastic belt.

4. The conveyor according to claim 3, wherein the idler comprises a pulley having a plurality of sheaves.

5. The conveyor according to claim 3, wherein the roller and the teeth of the endless thermoplastic belt have complementary shapes.

6. The conveyor according to claim 5, wherein each of the teeth comprises multiple spaced teeth portions, and the roller comprises projections sized for receipt in the spaces between the teeth portions to form the complementary shapes.

7. The conveyor according to claim 1, wherein the endless thermoplastic belt has a smooth inner surface, and the roller is smooth to complement the smooth inner surface of the thermoplastic belt.

8. The conveyor according to claim 7, wherein the endless thermoplastic belt comprises a plurality of holes that at least partially extend through the endless thermoplastic belt, and the drive pulley has a plurality of teeth configured to engage the holes for moving the endless thermoplastic belt.

9. The conveyor according to claim 8, wherein the idler comprises a pulley having a plurality of teeth.

10. The conveyor according to claim 1, wherein the endless thermoplastic belt extends between a pair of side edges, and the roller extends from one of the side edges of the endless thermoplastic belt to the other side edge of the endless thermoplastic belt.

11. The conveyor according to claim 1, and further comprising a slide that supports the roller on the return span and is configured to allow movement of the roller toward and away from the return span.

12. The conveyor according to claim 11, wherein the slide is further configured to prevent movement of the roller in the direction of movement of the return span.

13. The conveyor according to claim 12, wherein the slide is configured to allow vertical movement of the roller and prevent horizontal movement of the roller.

14. The conveyor according to claim 1, wherein the return span has a center located about midway between the drive pulley and the idler, and the roller is positioned closer to the idler than to the center of the return span.
